# EUROPEAN PATENT APPLICATION

(11) **EP 4 455 330 A1**
(43) Date of publication of application: **30.10.2024**
(21) Application number: 22911899.7
(22) Date of filing: 20.12.2022
(51) Int. Cl.: C22C 38/02, C22C 38/06, C22C 38/04, C21D 8/12, H01F 1/147

(54) **DOUBLE ORIENTED ELECTRICAL STEEL SHEET AND METHOD FOR MANUFACTURING SAME**

(30) Priority: 21.12.2021 KR 20210184343
(71) Applicant: POSCO Co., Ltd, Pohang-si, Gyeongsangbuk-do 37859 (KR)
(72) Inventor: MUN, Hyunwoo, Pohang-si, Gyeongsangbuk-do 37859 (KR); LEE, Se Il, Pohang-si, Gyeongsangbuk-do 37859 (KR); SHIN, Su-Yong, Pohang-si, Gyeongsangbuk-do 37859 (KR); KIM, Yunsu, Pohang-si, Gyeongsangbuk-do 37859 (KR)
(74) Representative: Meissner Bolte Partnerschaft mbB
(86) International application number: PCT/KR2022/020901
(87) International publication number: WO 2023/121266

(57) **Abstract**

A double oriented electrical steel sheet according to an exemplary embodiment of the present disclosure contains, in wt%, at least 2.0% of Si, more than 0% and 0.02% or less of Al, 0.02-0.50% of Mn, more than 0% and 0.004% or less of C, and 0.0005-0.005% of S, with the remainder comprising Fe and inevitable impurities, wherein the area percentage of grains having a grain size of 2000 µm or less is 25% or less.

## Description

### [Technical Field]

An exemplary embodiment of the present disclosure relates to a double oriented electrical steel sheet and a method for manufacturing the same. Specifically, an exemplary embodiment of the present disclosure relates to a double oriented electrical steel sheet with excellent magnetism in a rolling direction and a direction perpendicular to the rolling direction and a very small magnetic deviation by controlling a reduction ratio in secondary cold rolling and a temperature increase rate during cold-rolled sheet annealing to form fewer fine grains, and a method for manufacturing the same.

### [Background Art]

Steel sheets made of iron have different characteristics depending on a direction due to a structural feature called BCC. The characteristics of electrical steel sheets used as iron core materials for motors may be maximized by taking advantage of characteristics that magnetization in a <100> direction occurs most easily. For example, grain-oriented electrical steel sheets are used with atoms arranged so that a rolling direction (RD) of product and the <100> direction of all grains are parallel, using a secondary recrystallization phenomenon of texture called Goss.

In order to make the texture of all the grains into a texture with a specific direction, a phenomenon called secondary recrystallization is essential. By using the secondary recrystallization phenomenon, grains in undesired directions may be consumed and grains in preferred directions may be grown. After the secondary recrystallization is completed, only the desired grain direction remains.

However, the phenomenon of the secondary recrystallization is not yet completely understood, and debates over various theories are ongoing from two perspectives: growth of secondary grains and selection of growth direction. The main content of controversy is the secondary recrystallization phenomenon of Goss grains in the currently commercially available grain-oriented electrical steel sheets. Fine precipitates such as AIN should be created and used through nitriding annealing, and as AIN is dissolved at high temperature, the restraining force holding a grain boundary disappears, and only the Goss grows. Of course, there have been attempts to use this phenomenon to create a cube texture with a <001> direction in both RD and TD, but in most experimental conditions, only the Goss texture develops dominantly in the secondary recrystallization phenomenon using precipitates, so it is not easy to create texture other than Goss using the secondary recrystallization phenomenon.

In this patent, the secondary recrystallization phenomenon using surface energy is used to manufacture double oriented electrical steel sheets with good bidirectional magnetism.

### [Disclosure]

### [Technical Problem]

The present disclosure attempts to provide a double oriented electrical steel sheet and a method for manufacturing the same. Specifically, an exemplary embodiment of the present disclosure provides a double oriented electrical steel sheet capable of achieving secondary recrystallization of cube and {100} fiber texture using surface energy, and a method for manufacturing the same.

### [Technical Solution]

According to an exemplary embodiment of the present disclosure, a double oriented electrical steel sheet includes, in wt%, 2.0% or more of Si, 0.02% or less (excluding 0%) of Al, 0.02 to 0.50% of Mn, 0.004% or less (excluding 0%) of C, and 0.0005 to 0.005% of S, with the remainder comprising Fe and inevitable impurities.

An area percentage of grains having a grain size of 2000 µm or less may be 25% or less.

The area percentage of grains whose <100> direction may have an angle of about 15° with a normal direction of a rolled plane of the steel sheet is 75% or more.

An average grain size of grains may be 1000 to 5000 µm.

A magnetic flux density (B50) may be 1.82T or more, and an iron loss (W15/50) may be 1.65W/Kg or less.

According to another exemplary embodiment of the present disclosure, a method of manufacturing a double oriented electrical steel sheet includes: hot-rolling a slab containing, in wt%, 2.0% or more of Si, 0.02% or less (excluding 0%) of Al, 0.02 to 0.50% of Mn, 0.004% or less (excluding 0%) of C, and 0.0005 to 0.005% of S, with the remainder comprising Fe and inevitable impurities, to manufacture a hot-rolled sheet; manufacturing a primary cold-rolled sheet by primary cold-rolling the hot-rolled sheet; intermediate-annealing the primary cold-rolled sheet; manufacturing a secondary cold-rolled sheet by secondarily cold-rolling the intermediate annealed sheet; and annealing the secondary cold-rolled sheet.

In the manufacturing of the secondary cold rolled sheet, a reduction ratio may be 55 to 85%.

The method may further include, before the annealing of the secondary cold-rolled sheet, increasing the temperature at a temperature increase rate of 100°C/h or higher in a temperature range of 100 to 1000°C.

The method may further include after manufacturing the hot-rolled sheet, hot-rolled annealing the hot-rolled sheet.

The manufacturing of the primary cold-rolled sheet may include one time cold rolling or twice or more cold rolling with intermediate annealing interposed therebetween.

In the manufacturing of the primary cold-rolled sheet and the manufacturing of the second cold-rolled sheet, the rolling may be performed in the same direction.

In the intermediate annealing, the annealing may be performed at a temperature of 700°C or higher.

In the intermediate annealing, the annealing may be performed in a reducing atmosphere.

The method may further include, after the manufacturing of the secondary cold-rolled sheet, applying an annealing separator.

In the annealing of the secondary cold-rolled sheet, the annealing may be performed in a reducing atmosphere.

In the annealing of the secondary cold-rolled sheet, the annealing may be performed at a temperature of 1000 to 1200°C for 6 to 60 hours.

### [Advantageous Effects]

A double oriented electrical steel sheet according to an exemplary embodiment of the present disclosure has similar magnetic values in a rolling direction and a direction perpendicular to the rolling regardless of the direction, and exhibits excellent magnetic properties such as high magnetic flux density and a low iron loss.

### [Description of the Drawings]

FIGS. 1 to 10 are photographs of rolled planes of steel sheets manufactured in Comparative Examples 1 to 10.

FIGS. 11 and 12 are a photograph (left) of rolled planes, an inverse pole figure (IPF) map photograph (middle), and an orientation distribution function (ODF) map photograph (right) of steel sheets manufactured in Examples 1 and 2.

### [Mode for Invention]

The terms first, second, third, and the like are used to describe, but are not limited to, various parts, components, areas, layers and/or sections. These terms are used only to distinguish a part, component, region, layer, or section from other parts, components, regions, layers, or sections. Accordingly, a first part, a component, an area, a layer, or a section described below may be referred to as a second part, a component, a region, a layer, or a section without departing from the scope of the present disclosure.

Terminologies used herein are to mention only a specific exemplary embodiment, and do not to limit the present disclosure. Singular forms used herein include plural forms as long as phrases do not clearly indicate an opposite meaning. The meaning "including" used in the present specification concretely indicates specific properties, areas, integer numbers, steps, operations, elements, and/or components, and is not to exclude presence or addition of other specific properties, areas, integer numbers, steps, operations, elements, and/or components thereof.

When a part is referred to as being "above" or "on" other parts, it may be directly above or on other parts, or other parts may be included in between. In contrast, when a part is referred to as being "directly above" another part, no other part is involved in between.

All terms including technical terms and scientific terms used herein have the same meaning as the meaning generally understood by those skilled in the art to which the present disclosure pertains unless defined otherwise. Terms defined in commonly used dictionaries are additionally interpreted as having meanings consistent with related technical literature and currently disclosed content, and are not interpreted in ideal or very formal meanings unless defined.

In addition, unless otherwise specified, % means wt%, and 1 ppm is 0.0001 wt%.

In an exemplary embodiment, further including additional elements means that the remainder comprising iron (Fe) is replaced and included as much as the additional amount of the additional elements.

Hereinafter, an exemplary embodiment will be described in detail so that a person of ordinary skill in the art to which the present disclosure pertains can easily implement the present disclosure. As those skilled in the art would realize, the described embodiments may be modified in various different ways, all without departing from the spirit or scope of the present disclosure.

In an exemplary embodiment of the present disclosure, secondary recrystallization of cube and {100} fiber texture may be achieved using surface energy. It is a known fact that energy of a {110} plane, which is a close packed plane, becomes the lowest in iron with a BCC structure. However, when some impurities are included, the energy of the {100} plane becomes the lowest. In an exemplary embodiment of the present disclosure, only the cube and {100} fiber texture may be grown by maintaining the low energy state of the {100} plane during the long-term annealing of the cold-rolled sheet. The secondary recrystallization phenomenon occurs due to selective crystal growth using the surface energy.

According to an exemplary embodiment of the present disclosure, a double oriented electrical steel sheet includes, in wt%, 2.0% or more of Si, 0.02% or less (excluding 0%) of Al, 0.02 to 0.50% of Mn, 0.004% or less (excluding 0%) of C, and 0.0005 to 0.005% of S, with the remainder comprising Fe and inevitable impurities.

The reason for limiting the compositions of the double oriented electrical steel sheet will be described first.

### Si: 2.0 wt% or more

Silicon (Si) serves to increase resistivity of a steel sheet and reduce eddy current loss, and allows heat treatment to occur in a single phase of ferrite. When Si is too little, partial phase transformation of ferrite to austenite may occur during heat treatment. Therefore, the lower limit of Si content may be limited to 2.0 wt%. In addition, as Si is added, the more difficult winding and cold rolling become. When Si exceeds 7.0 wt%, sheet breakage may occur, which may be limited if necessary. That is, Si may be included in an amount of 2.0 to 7.0 wt%. More specifically, in order to obtain a steel sheet having a high magnetic flux density, Si may be contained in an amount of 2.5 to 4.0 wt%.

### Al: 0.02 wt% or less

Aluminum (Al) may serve to increase resistivity. However, Al₂O₃ is formed on a surface of a steel sheet during heat treatment of a steel sheet to which a large amount of Al is added. Al₂O₃ may penetrate into a grain boundary from the surface, which inhibits the growth of grains and becomes a factor hindering secondary recrystallization. Therefore, the Al content is preferably 0.02 wt% or less. More specifically, Al may be contained in an amount of 0.01 wt% or less. More specifically, Al may be contained in an amount of 0.005 wt% or less. More specifically, Al may be contained in an amount of 0.001 to 0.005 wt%.

### Mn: 0.02 to 0.50 wt%

Manganese (Mn) is an element that increases resistivity. However, when the addition of Mn is excessive, there is a possibility of passing the austenite region during heat treatment, and causing a phase transformation. In addition, an excessive amount of Mn traps sulfur more than necessary, thereby preventing the diffusion of element S. An appropriate amount of Mn precipitates fine MnS to hold the grain boundary with weak force, MnS melts away at an appropriate temperature, and secondary recrystallization occurs. Since a speed of volatilized S may be controlled to some extent with Mn, it can be seen that the addition of an appropriate amount of Mn plays a certain role in secondary recrystallization. More specifically, Mn may be contained in amount of 0.05 to 0.30 wt%.

### C: 0.004 wt% or less

Unlike other elements described above, carbon (C) is not substituted with Fe atoms and is an element that penetrates into an interstitial site. Due to its properties, when C is added in a large amount, the movement of dislocations is inhibited and the growth of grains is hindered. More specifically, C may be contained in an amount of 0.003 wt% or less. More specifically, C may be contained in an amount of 0.001 to 0.003 wt%.

### S: 0.0005 to 0.0050 wt%

The surface energy of sulfur (S) is changed depending on the content of S segregated on the surface, and the crystal growth of grains of a specific orientation may occur due to the changed surface energy. A {110} plane is stable on the surface without S at all, a {100} plane is stable on the surface where S is weakly segregated, and a {111} plane is stable on the surface with a large amount of S segregation. To slightly segregate S on the surface, the S content is adjusted to a very small amount. Mn also acts as an additional trap for S, helping to weakly segregate S on the surface. More specifically, S may be contained in an amount of 0.0010 to 0.0040 wt%.

In addition, in the double oriented electrical steel sheet of the present disclosure, the remainder other than the above-described components is Fe and inevitable impurities. However, it does not exclude containing other elements as long as they are in the range which does not impair the effect of the present disclosure. When additional elements are included, these additional elements may be included in place of Fe. Additional elements may include, for example, one or more of N, Ti, P, Cu, Cr, Ni, and Mo, and when additional elements are added, these additional elements may be included in an amount of 0.1% by weight or less.

An area percentage of grains having a grain size of 2000 µm or less is 25% or less. In an exemplary embodiment of the present disclosure, the secondary cold-rolled sheet annealing is performed for a long period of time of 6 hours or more, but the fine grains do not grow any further, and when these fine grains remain, these fine grains become a factor that inhibits magnetism. In an exemplary embodiment of the present disclosure, the generation of fine grains is suppressed through rapid temperature increase before the secondary cold-rolled sheet annealing, and through this, the magnetism may be further improved. More specifically, the area percentage of grains with a grain size of 2000µm or less may be 10% or less. More specifically, the area percentage of grains with a grain size of 2000µm or less may be 5% or less. In an exemplary embodiment of the present disclosure, a grain size of grains may be measured based on a plane parallel to the rolled plane (ND plane), and a diameter of an imaginary circle having the same area as the area of the grain is regarded as the grain size. The area percentage and grain size of grain may be measured based on a plane parallel to the rolled plane (ND plane), and to reduce errors, the area percentage may be measured from a specimen with an area of at least 60 × 60 mm². In an exemplary embodiment of the present disclosure, there is no substantial change in the grain size and area percentage of grains in the thickness direction, so the measured thickness may be measured at any thickness.

The area percentage of grains whose <100> direction has an angle of about 15° with a normal direction (ND direction) of a rolled plane of the steel sheet is 75% or more. The higher the fraction of the grains, that is, the fraction of <100>//ND grains whose <100> direction has an angle of about 15° with the normal direction of the rolled plane of the steel sheet, the better the magnetism. An angle within about 15° refers to an angle between the <100> direction and the normal direction of the rolled plane, based on an arbitrary plane that includes both the <100> direction and the normal direction of the rolled plane.

The double oriented electrical steel sheet according to an exemplary embodiment of the present disclosure may have an average grain size of 1000 to 5000 µm. When the average grain size of the grain is too small, the fraction of <100>//ND texture may be low, resulting in inferior magnetism. The grain size diameter may be measured based on the plane parallel to the rolled plane (ND plane) of the steel sheet. More specifically, the average crystal grains diameter may be 2500 µm or more. An average grain size refers to the number average grain size.

The double oriented electrical steel sheet according to an exemplary embodiment of the present disclosure has both the excellent magnetic flux density and iron loss. A magnetic flux density (B50) may be 1.82T or more, and an iron loss (W15/50) may be 1.65W/Kg or less. More specifically, a magnetic flux density (B50) may be 1.90T or more, and an iron loss (W15/50) may be 1.30W/Kg or less. In an exemplary embodiment of the present disclosure, the magnetic flux density (B50) and iron loss (W15/50) refer to an average value of the magnetic flux density (B50) and iron loss (W15/50) measured in the rolling direction (RD direction) and the rolling vertical direction (TD direction), and the average value is a measurement value based on a steel sheet thickness of 0.2mm.

A method of manufacturing a double oriented electrical steel sheet includes: hot-rolling a slab to manufacture a hot-rolled sheet; manufacturing a primary cold-rolled sheet by primary cold-rolling the hot-rolled sheet; intermediate annealing the primary cold-rolled sheet; manufacturing a secondary cold-rolled sheet by secondarily cold-rolling the intermediate annealed sheet; and annealing the secondary cold-rolled sheet.

Hereinafter, each step will be described in detail.

First, a slab is manufactured. The reason for limiting the addition ratio of each composition in the slab is the same as the reason for limiting the composition of the above-described double-oriented electrical steel sheet, and thus, repeated description will be omitted. In the manufacturing process of hot rolling, hot-rolled sheet annealing, primary cold rolling, intermediate annealing, secondary cold rolling, secondary cold-rolled sheet annealing, and the like, which will be described later, the element content does not substantially change, so the composition of the slab and the composition of the double oriented electrical steel sheet are substantially the same.

The slab may be manufactured using a thin slab method or a strip casting method. The thickness of the slab may be 200 to 300 mm. The slab may be heated as needed. The heating temperature may be 1100 to 1250°C, and the heating time may be 30 minutes or more.

Next, the slab is hot-rolled to manufacture the hot-rolled steel sheet.

In the manufacturing of the hot-rolled sheet, the thickness of the hot-rolled sheet may be 2.0 to 3.0 mm.

The method may further include annealing the hot-rolled sheet after manufacturing the hot-rolled sheet. In the annealing of the hot-rolled sheet, the annealing may be performed at a temperature of 1000 to 1150°C. In addition, the annealing may be performed for 60 to 150 seconds. The method may further include pickling after the annealing of the hot-rolled sheet.

Next, a primary cold-rolled sheet is manufactured by primarily rolling the hot-rolled sheet.

The manufacturing of the primary cold-rolled sheet may include one time cold rolling or twice or more cold rolling with intermediate annealing interposed therebetween.

In the manufacturing of the primary cold-rolled sheet and the manufacturing of the second cold-rolled sheet, the rolling may be performed in the same direction.

Next, the primary cold-rolled sheet is annealed in the middle.

Since the intermediate annealing is sufficient to complete recrystallization, the annealing may be performed at 700°C or higher for 60 to 150 seconds.

In the intermediate annealing, the annealing may be performed in a reducing atmosphere. Since the secondary cold rolling should be performed after the intermediate annealing, the annealing may be performed in an atmosphere with a large amount of hydrogen so as not to be oxidized during the annealing. The remaining atmosphere may be air. More specifically, the annealing may be performed in an atmosphere containing 99 vol% or more of hydrogen.

Next, the intermediate annealed sheet is subjected to secondary cold rolling to prepare a secondary cold-rolled sheet.

The secondary cold rolling may adjust a reduction ratio to 55 to 85%. When the reduction ratio is too small, few grains in the <100>//ND orientation may be formed. When the reduction ratio is too high, the <001> direction of the crystal grains rotates after recrystallization, and secondary recrystallization occurs in a direction such as <250> or <120>, which rotates more than <380>. More specifically, the reduction ratio may be 55 to 80%. More specifically, the reduction ratio may be 55 to 65%.

The reduction ratio may be calculated as ([thickness of steel sheet before reduction] - [thickness of steel sheet after reduction])/[thickness of steel sheet before reduction].

After the secondary cold rolling, an annealing separator may be applied for long-time annealing. The annealing separator may contain alumina (Al₂O₃).

Next, the secondary cold-rolled sheet is annealed.

The method may further include, before the annealing of the secondary cold-rolled sheet, increasing the temperature at a temperature increase rate of 100°C/h or higher in a temperature range of 100 to 1000°C. In an exemplary embodiment of the present disclosure, the temperature increase rate means the average temperature increase rate in the corresponding temperature range. When the temperature increase rate is too low, many fine grains remain. This remains even if annealed for a long period of time in the cold-rolled sheet annealing process which will be described later, and has an adverse effect on magnetism. On the other hand, when the temperature increase rate is appropriately adjusted, the fine grains may be minimized by growing a plurality of fine grains. The upper limit is not particularly limited, but may be 500°C/h. More specifically, the temperature increase rate may be 100 to 300°C/h.

The annealing of the secondary cold-rolled sheet may be annealed for 6 to 60 hours. When the annealing time is too short, the grains in the <100>//ND orientation may not be approximately formed. When the annealing time is too long, energy waste may occur. More specifically, the final annealing may be annealed for 12 to 48 hours.

In the annealing of the secondary cold-rolled sheet, the annealing may be performed in a reducing atmosphere. The annealing may be performed in an atmosphere with a large amount of hydrogen to prevent oxidation during annealing. The remaining atmosphere may be air. More specifically, the annealing may be performed in an atmosphere containing 99 vol% or more of hydrogen.

The annealing of the secondary cold-rolled sheet may be performed at a temperature of 1000 to 1200°C. When the annealing temperature is too low, the recrystallization may not occur approximately. Even if the annealing temperature is higher, it is difficult to improve the magnetism.

The following examples illustrate the present disclosure in more detail. However, the following Examples are only exemplary embodiments of the present disclosure, and the present disclosure is not limited to the following Examples.

### Experimental Example 1

A slab containing, in wt%, Si: 3.1%, Mn: 0.1%, Al: 0.003%, C: 0.002%, S: 0.003%, N: 0.002%, Ti: 0.001%, P: 0.007%, the remainder comprising Fe and inevitable impurities was manufactured, heated at 1130°C for 2 hours, and then hot-rolled to 2.5mm. The hot-rolled sheet was heat-treated at 1070°C for 2 minutes, and was primarily subjected to cold rolling after pickling. An experiment was performed by varying the reduction ratio of secondary cold rolling from 50% to 90%. Therefore, the final thickness during the primary cold rolling was 2mm (90%), 1mm (80%), 0.67mm (70%), and 0.50mm (60%), respectively, and the specimen subjected to the first rolling was heat-treated at 1050°C for about 2 minutes. In this case, the process was carried out in an atmosphere of 100 vol% of hydrogen. The specimen was subjected to the secondary cold rolling and finally fitted to a thickness of 0.2 mm. Each specimen was cut into a size of 60 × 60mm to measure magnetism with a single sheet tester (SST), and the size-fitted specimens were heat-treated to 1200°C for 24 hours. In this case, the temperature increase rate in the temperature range of 100 to 1000°C was performed by varying as shown in Table 1 below.

A photo of the grain was obtained by scanning the grain area percentage, and the area fraction of fine grains was calculated by the method for obtaining an area of grain in the photo.

The grain orientation was measured in an area of 6cm × 6cm using Laue X-ray diffraction.

**(Table 1)**

| | S econdar y cold reductio n ratio ( %) | T emperatu re increase rate (° C/h) | G rain area percenta ge of 2000 µm or less (%) | < 100>//N D a rea percent age %) ( | B50( T) | W 15/50(W/k g) |
|---|---|---|---|---|---|---|
| Compar ative Example 1 | 5 0 | 1 0 | 1 00 | 5 | .69 | 1. 72 |
| Compar ative Example 2 | 6 0 | 1 0 | 1 00 | 5 | .72 | 1. 59 |
| Compar ative Example 3 | 7 0 | 1 0 | 1 00 | 5 | .74 | 1. 63 |
| Compar ative Example 4 | 8 0 | 1 0 | 1 00 | 5 | .72 | 1. 66 |
| Compar ative Example 5 | 9 0 | 1 0 | 1 00 | 5 | .59 | 2. 03 |
| Compar ative Example 6 | 5 0 | 1 5 | 6 8 | 4 0 | .65 | 1. 87 |
| Compar ative Example 7 | 6 0 | 1 5 | 6 7 | 4 0 | .78 | 1. 47 |
| Compar ative Example 8 | 7 0 | 1 5 | 8 4 | 3 5 | .76 | 1. 51 |
| Compar ative Example 9 | 8 0 | 1 5 | 9 1 | 1 5 | .69 | 1. 79 |
| Compar ative Example 10 | 9 0 | 1 5 | 9 4 | 1 0 | .62 | 2. 04 |
| Exampl e 1 | 7 0 | 3 00 | 3 | 9 7 | .99 | 1. 30 |
| Exampl e2 | 8 0 | 3 00 | 3 | 9 7 | .92 | 1. 32 |

As shown in Table 1, it can be seen that in the example in which the reduction ratio during the secondary cold rolling and the temperature increase rate during the secondary cold rolling sheet annealing were appropriately adjusted, <100>//ND crystal grains are appropriately formed and the generation of fine grains is suppressed. Meanwhile, when the reduction ratio of the secondary cold rolling is too small or large, it can be seen that the <100>//ND grains may not be properly formed and the magnetic properties are inferior. In addition, when the temperature increase rate is not properly controlled during the secondary cold-rolled sheet annealing, it can be seen that many fine grains are formed and the magnetic properties are inferior.

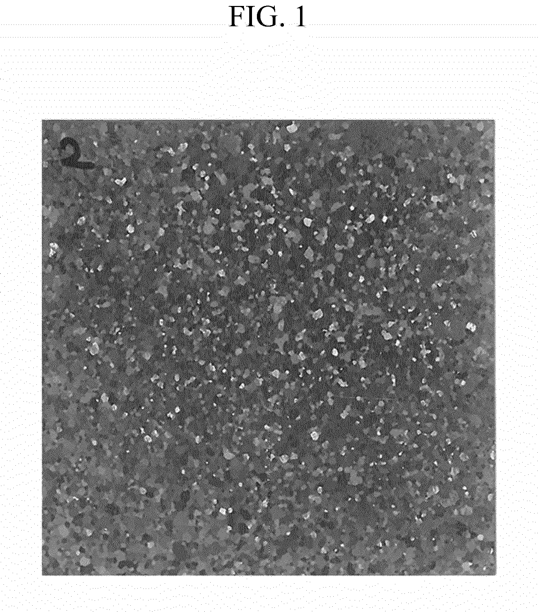

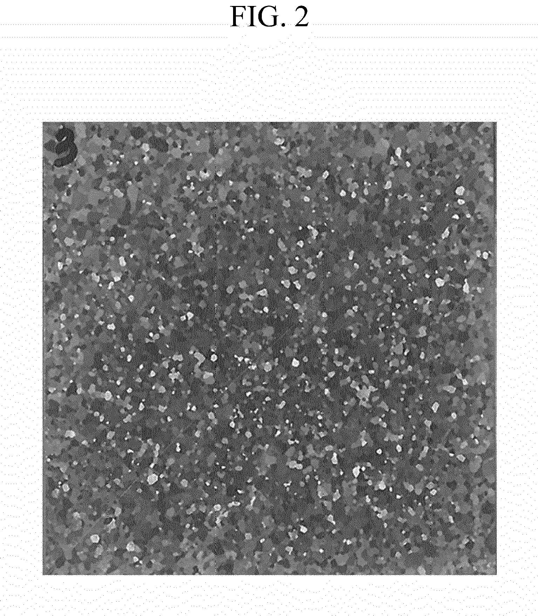

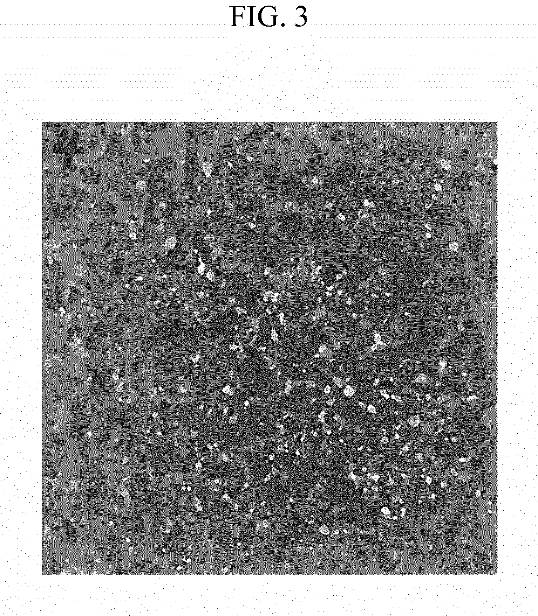

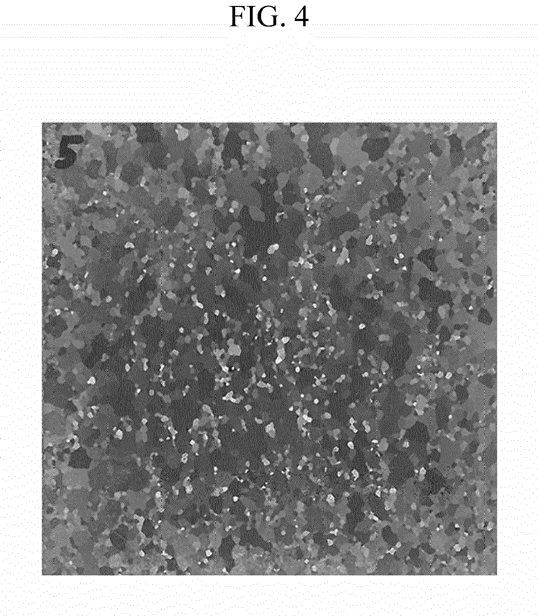

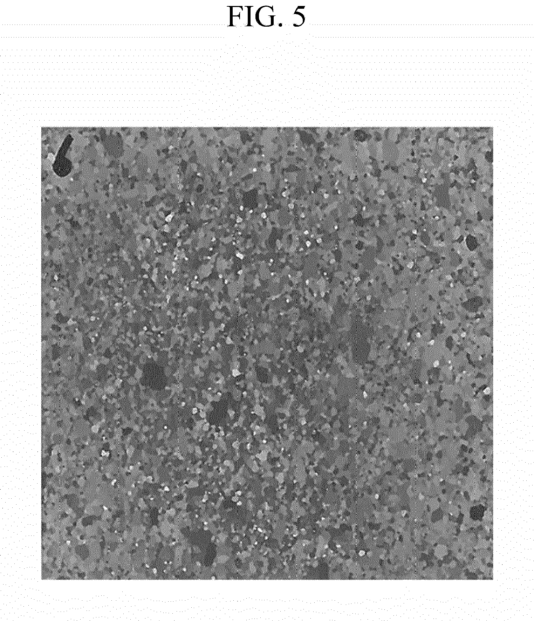

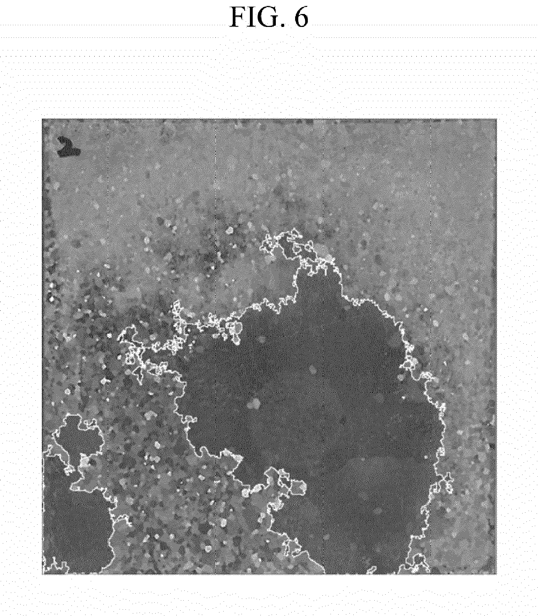

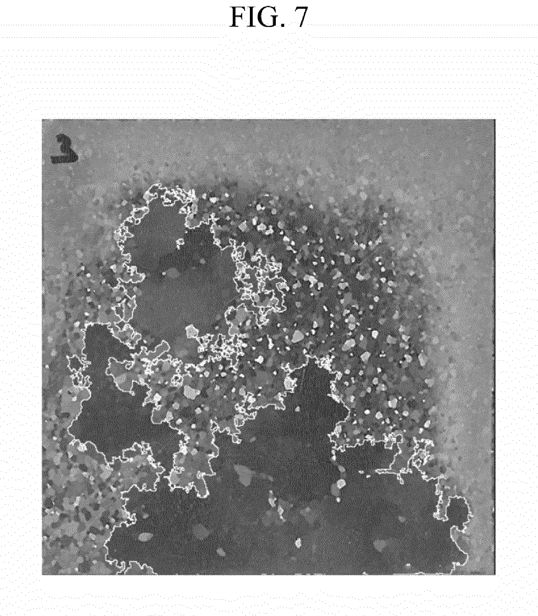

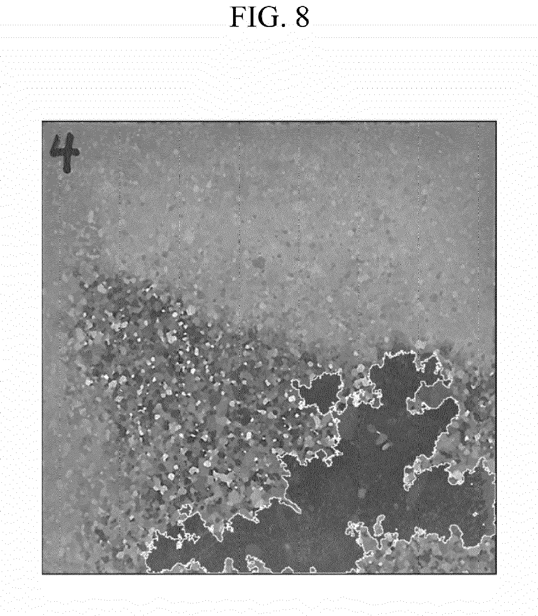

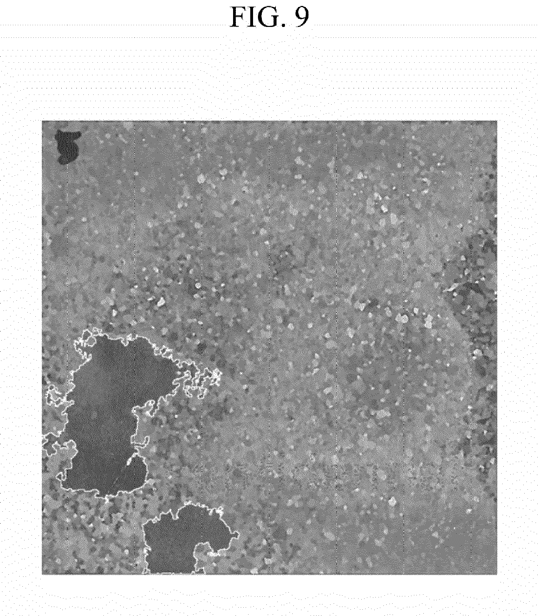

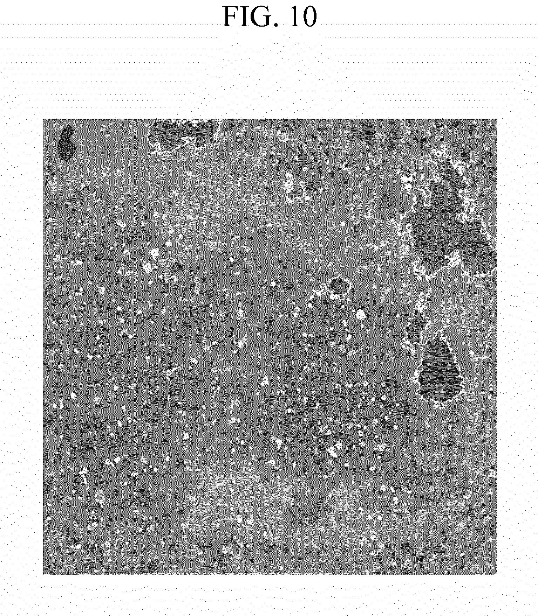

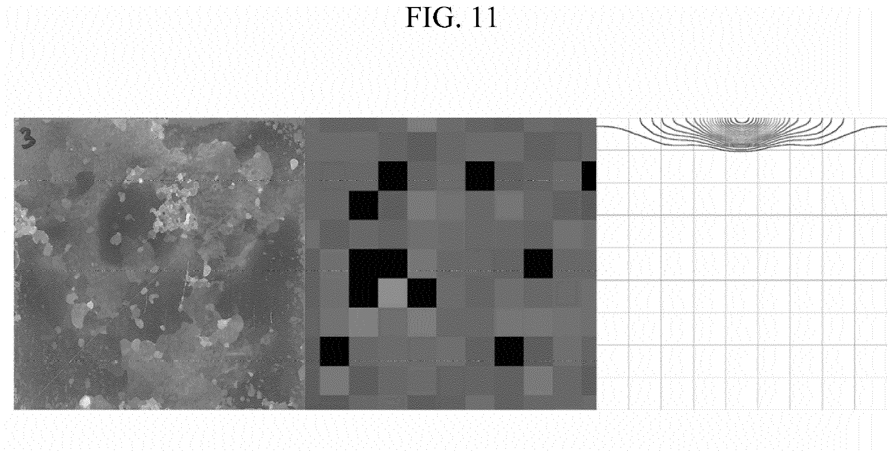

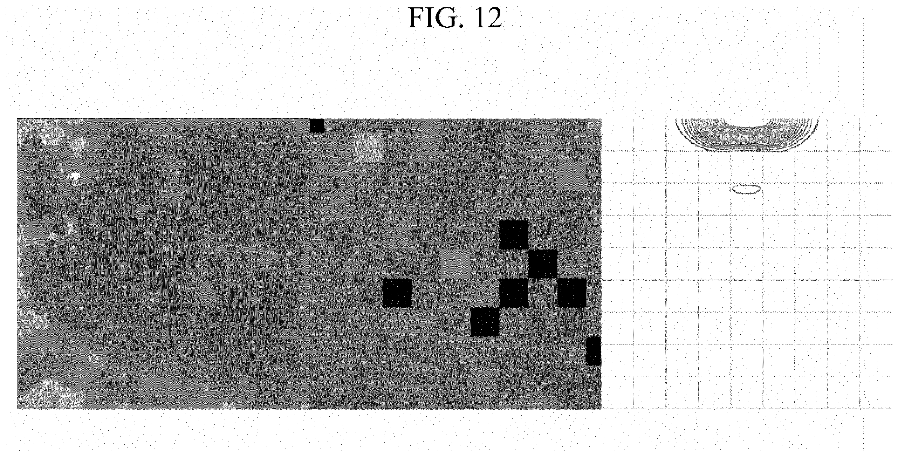

FIGS. 1 to 5 are photographs of rolled planes of steel sheets manufactured in Comparative Examples 1 to 5, respectively. It can be seen that when the temperature increase rate is 10°C/h, large amounts of fine particles are not formed. FIGS. 6 to 10 are photographs of rolled planes of steel sheets manufactured in Comparative Examples 6 to 10, respectively. When the temperature increase rate is 15°C/h, the secondary recrystallization phenomenon begins to occur. FIGS. 11 and 12 are photographs of the rolled planes of the steel sheets manufactured in Examples 1 and 2, respectively. It can be seen that at a temperature increase rate of 300°C/h, the secondary recrystallization occurs at 97% or more and most fine grains do not exist. FIGS. 1 to 12 are all photographs of 6 cm × 6 cm in size, and the yellow line indicates the grain boundary between the secondary recrystallization and the fine grains.

FIGS. 11 and 12 are photographs of the inverse pole figure (IPF) map of the steel sheets manufactured in Examples 1 and 2. FIGS. 15 and 16 are photographs of the orientation distribution function (ODF) of the steel sheets manufactured in Examples 1 and 2.

In the IPF maps of FIGS. 11 and 12, the <100>//ND is displayed in red. As illustrated in FIGS. 11 and 12, one or two parts displayed in blue are present, which are measurement errors caused by several grains present in one measurement part due to the wide measurement interval, and are difficult to interpret as <111>//ND grain.

It may be seen that the ODF maps of FIGS. 11 and 12 show when psi2 is 45°, and in the ODF, the grid is spaced at 10° intervals, and only the direction is changing while the {100} plane is maintained. In addition, it may be seen that the contour line of the texture strength in the ODF is within 15° of the <100>//ND plane.

The present disclosure is not limited to the exemplary embodiments, but may be manufactured in a variety of different forms, and the present disclosure may be manufactured in a variety of different forms, and those of ordinary skill in the art to which the present disclosure pertains will understand that the present disclosure may be implemented in other specific forms without changing the technical spirit or essential features of the present disclosure. Therefore, it should be understood that the above-mentioned exemplary embodiments are exemplary in all aspects but are not limited thereto.

## Claims

1. A double oriented electrical steel sheet, comprising:
in wt%, 2.0% or more of Si, 0.02% or less (excluding 0%) of Al, 0.02 to 0.50% of Mn, 0.004% or less (excluding 0%) of C, and 0.0005 to 0.005% of S, with the remainder comprising Fe and inevitable impurities, wherein an area percentage of grains having a grain size of 2000 µm or less is 25% or less.

2. The double oriented electrical steel sheet of claim 1, wherein:
the area percentage of grains whose <100> direction has an angle of about 15° with a normal direction of a rolled plane of the steel sheet is 75% or more.

3. The double oriented electrical steel sheet of claim 1, wherein:
an average grain size of grains is 1000 to 5000 µm.

4. The double oriented electrical steel sheet of claim 1, wherein:
a magnetic flux density (B50) is 1.82T or more, and an iron loss (W15/50) is 1.65W/Kg or less.

5. A method of manufacturing a double oriented electrical steel sheet, comprising:
hot-rolling a slab containing, in wt%, 2.0% or more of Si, 0.02% or less (excluding 0%) of Al, 0.02 to 0.50% of Mn, 0.004% or less (excluding 0%) of C, and 0.0005 to 0.005% of S, with the remainder comprising Fe and inevitable impurities, to manufacture a hot-rolled sheet; manufacturing a primary cold-rolled sheet by primary cold-rolling the hot-rolled sheet; intermediate-annealing the primary cold-rolled sheet; manufacturing a secondary cold-rolled sheet by secondarily cold-rolling the intermediate annealed sheet; and annealing the secondary cold-rolled sheet,
wherein, in the manufacturing of the secondary cold-rolled sheet, a reduction ratio is 55 to 85%,
further comprising, before the annealing of the secondary cold-rolled sheet, increasing the temperature at a temperature increase rate of 100°C/h or higher in a temperature range of 100 to 1000°C.

6. The method of claim 5, further comprising:
after manufacturing the hot-rolled sheet, hot-rolled annealing the hot-rolled sheet.

7. The method of claim 5, wherein:
the manufacturing of the primary cold-rolled sheet includes one time cold rolling or twice or more cold rolling with intermediate annealing interposed therebetween.

8. The method of claim 5, wherein:
in the manufacturing of the primary cold-rolled sheet and the manufacturing of the second cold-rolled sheet, the rolling is performed in the same direction.

9. The method of claim 5, wherein:
in the intermediate annealing, the annealing is performed in a reducing atmosphere.

10. The method of claim 5, further comprising:
after the manufacturing of the secondary cold-rolled sheet, applying an annealing separator.

11. The method of claim 5, wherein:
in the annealing of the secondary cold-rolled sheet, the annealing is performed in a reducing atmosphere.

12. The method of claim 5, wherein:
in the annealing of the secondary cold-rolled sheet, the annealing is performed at a temperature of 1000 to 1200°C for 6 to 60 hours.
